# EUROPEAN PATENT APPLICATION

(11) **EP 4 534 882 A1**
(43) Date of publication of application: **09.04.2025**
(21) Application number: 23202037.0
(22) Date of filing: 06.10.2023
(51) Int. Cl.: F16L 19/02, F16L 23/16

(54) **LEAK-TIGHT AND DETACHABLE FLUID SUPPLY CONNECTION**

(71) Applicant: Airbus Operations GmbH, 21129 Hamburg (DE)
(72) Inventor: Lammert, Nils, Hamburg (DE); Adameck, Norbert, Hamburg (DE); Wagner, Jonas, Hamurg (DE)

(57) **Abstract**

The present invention relates to a connection part for a fluid supply conduit.

In order to provide an improved way of connecting fluid supplies, a connection part (10) for a fluid supply conduit (12) is provided. The connection part (10) comprises a connecting element (14) and a sealing element (16). The connecting element is configured as a connection port for a conduit segment (18) to an adjoining conduit segment (20). The sealing element is configured to be placeable at a connecting interface (22) between the connecting element and a connecting element of the adjoining conduit segment (24). The sealing element is configured to be meltable during an assembly phase to maximize its contacts with at least one surface (26) of the connecting interface and solidifiable to form a gas leak-tight connection (28) between the connecting element and the connecting element of the adjoining conduit segment of the fluid supply conduit. The connecting interface of the connecting element and the connecting element of the adjoining conduit segment is configured to be detachable.

## Description

### FIELD OF THE INVENTION

The present invention generally relates to tightly joining tubes and pipes of fluid supplies, more specifically it relates to a connection part for a fluid supply conduit, to a coupling arrangement, to a conduit system, to an aircraft deploying the conduit system and to a method for sealingly connecting conduits by the connection part.

### BACKGROUND OF THE INVENTION

Designing a connection between fluid supply conduits relies on separate sealing elements in combination with precisely machined surfaces. Sealing elements show a high leak rate with respect to fluid supply conduits that supply small-sized molecule like e.g. hydrogen and more precisely machined surfaces increase cost.

### SUMMARY OF THE INVENTION

There may thus be a need for more configurable, reliable and efficient connection between fluid supply conduits.

The object of the present invention is solved by the subject-matter of the independent claims; further embodiments are incorporated in the dependent claims. It should be noted that the following described aspects of the invention apply also for the connection part, for the coupling arrangement, for the conduit system, for the aircraft and for the method for sealingly connecting conduits.

According to the present invention, a connection part for a fluid supply conduit is provided. The connection part comprises a connecting element and a sealing element. The connecting element is configured as a connection port for a conduit segment to an adjoining conduit segment. The sealing element is configured to be placeable at a connecting interface between the connecting element and a connecting element of the adjoining conduit segment. The sealing element is configured to be meltable during an assembly phase to maximize its contacts with at least one surface of the connecting interface and solidifiable to form a gas leak-tight connection between the connecting element and the connecting element of the adjoining conduit segment of the fluid supply conduit. The connecting interface of the connecting element and the connecting element of the adjoining conduit segment is configured to be detachable.

As an effect, expensive removal of machining imperfections can be compensated by cheaper sealing material.

As an advantage, the sealing element eliminates the need for highly precise surfaces or sealing rings by connecting the flanges with a metallic bond and filling existing gaps and thereby reducing leakage to a minimum.

As a further advantage, vacuum- or gas-tight sealing grooves and the contact surfaces of gas-leak tight connections do not require very precisely machining and may have surface roughness.

As an advantage, a gas-leak tight connection can be established without the need for welding between the connecting element and a connecting element of the adjoining conduit segment.

As an advantage, the proposed solution allows a metallic bond between the two pipes, or conduits while still being removable without destructive techniques (cutting).

As a further advantage, the introduction of high (welding) temperatures to the pipes is not required, reducing the alteration of the pipe material 's properties.

As an advantage, in comparison to connections with a similarly reduced leakage rate just relying on elastomer or metal seal, which are more complex to manufacture, and heavier than the proposed solution, the present connection is easier to manufacture and lighter in weight.

As an advantage, the connection can be opened either by force or by reheating.

According to an example, the connection part comprises a profile. The profile is configured as a first part of a threaded connection comprising an outer thread on a first tube-like part and a nut-type part having an inner thread for connecting with the outer thread of the first tube like part. The nut has an inner abutment surface for abutting against an outer abutment structure arranged on a second tube-like part. A sealing receiving portion is formed axially extending from the threaded connection. For an abutment of the first tube-like part and the second tube-like part, both end faces of the first tube-like part and the second tube-like part are having correspondingly inclined abutment surfaces.

As an effect, when heated the sealing is sucked in between the union and nut via a capillary effect closing possible gaps.

According to an example, the profile is as a first part of a flange connection comprising a first flange of the connecting element and a second flange of the connecting element of the adjoining conduit segment. The first flange and the second flange have matching end surfaces for axially abutting against each other. At least one of the first flange and the second flange comprises an inclined back-surface on the other side of the end surface. The flange connection with its at least inclined back-surface is configured for being urged against each other by a radially acting a compressing force of a sleeve-like compressing element.

According to an example, a melting-aid layer is provided for the sealing element. The melting-aid layer comprises particles of a melting-aid substance effecting the melting of the sealing element during the assembly phase in that it maximizes the contact of the sealing element and its adjacent surfaces. The melting-aid layer is provided as at least one of the following: Interbedded in the melting-aid substance in a contacting surface area of the connecting element, as a coating on the connecting element, the coating comprising the melting-aid substance, as a coating on the sealing element, the coating comprising the melting-aid substance, interbedded in the melting-aid substance in the sealing element and as shim-formed layer comprising the melting-aid substance.

According to the present invention, also a coupling arrangement for coupling conduit segments of fluid supply conduits is provided. The coupling arrangement comprises a first connecting partition for a first conduit segment and a second connecting partition for a second conduit segment. The first connecting partition is configured as a connection part according to one of the previous examples comprising the connecting element as a first connecting element. The second connecting partition comprises a matching connecting element as a second connecting element. The first connecting element and the second connecting element are configured to be complementary to each other. The sealing element is configured to be placeable between the first connecting element and the second connecting element.

According to an example, the coupling arrangement is configured to sustain a gas leak-tight connection for a fluid with a small molecular size of the group comprising at least hydrogen and helium.

According to the present invention, also a conduit system is provided. The conduit system comprises a plurality of conduit segments and at least one coupling arrangement according to one of previous examples. At least some of the conduit segments are interconnected by the at least one coupling arrangement.

According to the present invention, also an aircraft is provided. The aircraft comprises a fluid reservoir storing a fluid, at least one load configured for operating with the fluid and the conduit system according to the previous example. The conduit system supplies the fluid from the fluid reservoir to the at least one load.

As an advantage, the coupling arrangement allows fast repair and inspection of a hydrogen-powered aircraft.

According to the present invention, also a method for sealingly connecting conduits is provided. The method comprises the following steps:
- Providing a connection part according to one of the previous examples having the connecting element as a first connecting element,
- Providing a second connecting element complementary to the first element forming a coupling arrangement according to one of the previous examples,
- Connecting the first connecting element and the second connecting element by the compressing element to yield the coupling arrangement,
- Heating the at least one sealing element to a liquid state such that it maximizes the contacts with at least one surface of the connecting interface, and
- Bringing the at least one sealing element to a solid state to form the gas leak-tight connection between the first connecting element and the second connecting element.

According to an aspect of the invention, a conventional elastomer or metal seal is omitted and a sealing sheet ring is introduced in a flange connection formed by two connectors. The sealing sheet ring is melted after the connection is tightened and heated up to a melting temperature. The sealing then creates a metallic bond between the two connectors. The sealing is brought into the connection via a sealing sheet ring in between the opposing surfaces of the flanges of the connectors.

According to an aspect of the invention and alternatively, based on a clamp ring threaded connector, a proposed solution adds a sealing in between a sleeve, a union and a nut, that is melted after the connection is threaded together, creating a metal bond between the parts. The sealing is brought into the connector via a sealing ring on the sleeve where all three parts are closest to each other.

According to an aspect of the invention, the metal seal is configured to form a leak-tight metallic bond between connectors of two pipes, whereas the two connectors prevent structural loads from breaking the leak-tight metallic bond of the sealing element.

According to an aspect of the invention, it is especially important for brittle sealing elements to keep force flows away from the sealing or the force flows will cause the sealing element to fracture, break and become leaky. Moreover, there is a tendency of the sealings to become more brittle if lower temperatures are envisaged. The problem gets even worse with sealing elements, that are subjected to high temperature differences, and temperature-induced movement thereby in connection to mechanical movement. Mechanical movement of the construction is intended in the design of airplanes to provide for more stability. The structural parts of the airplane and the associated conduits will give way if the aircraft is on a mission. This environment is for example encountered with regards to future liquid hydrogen conduit systems in aircrafts.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows a part of a cross section of an example of a coupling arrangement formed from connection parts.
Fig. 2 schematically shows an example of a coupling arrangement forming a threaded connection from connection parts.
Fig. 3 schematically shows an example of a coupling arrangement forming a threaded connection from connection parts.
Fig. 4 schematically shows a cross section of an example of a coupling arrangement forming a flange connection.
Fig. 5 schematically shows a part of a cross section of an example of a coupling arrangement forming a flange connection and comprising several melting aid layers.
Fig. 6 schematically shows an airplane with a conduit system comprising the coupling arrangement.
Fig. 7 shows basic steps of an example of a method for sealingly connecting conduits by the connection part.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of', when preceding a list of elements, modify the entire list of elements and do not modify the individual elements of the list.

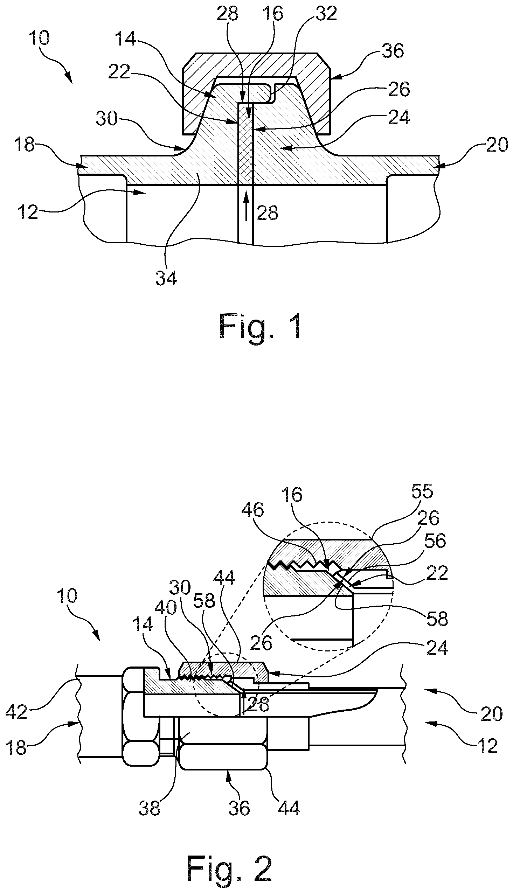

Fig. 1 schematically shows a part of a cross section of an example of a coupling arrangement formed from connection parts. A connection part 10 for a fluid supply conduit 12, comprises a connecting element 14 and a sealing element 16. The connecting element 14 is configured as a connection port for a conduit segment 18 to an adjoining conduit segment 20. The sealing element 16 is configured to be placeable at a connecting interface 22 between the connecting element 14 and a connecting element of the adjoining conduit segment 24. The sealing element 16 is configured to be meltable during an assembly phase to maximize its contacts with at least one surface 26 of the connecting interface 22 and solidifiable to form a gas leak-tight connection, represented byarrow 28, between the connecting element 14 and the connecting element of the adjoining conduit segment 24 of the fluid supply conduit 12. The arrow 28 indicates, that the gas leak-tight connection is impermeable for gases outside or inside the fluid supply conduit 12. The connecting interface 22 of the connecting element 14 and the connecting element of the adjoining conduit segment 24 is configured to be detachable.

The term "connection part 10" can be understood as any entity, that provides contact between different conduit segments.

The term "fluid" relates to e. g. a liquid or gas, that continuously deforms, i. e. flows, under an applied shear stress, or external force, but also forces induced by the fluid pressure.

The term "fluid supply conduit 12" relates to any entity enclosing a lumen, wherein the lumen serves for a restricted transport of gases and/or liquids separate from the outer environment of the "fluid supply conduit 12".

In an example, the term "supply" also relates to a property of the conduits in insulating gases and/or liquids from the outer environment.

In an example, the conduits possess a thermal insulating layer or are made from a thermal insulating material.

In an example, the conduits are made from a material, that does not change upon contact with the gases and/or liquids. Preferably, the conduits are made from materials, that do not change upon contact with liquid or pressurized hydrogen.

In another example, the conduit walls are made from composite materials.

In an example, the conduits come with varying shapes, thicknesses and gradients of thicknesses of their conduit walls.

The fluid supply conduit can also be referred to as piping, pipeline or tubing.

Connecting can also be referred to as linking, tying, joining, interconnecting or uniting.

The term "connecting element 14" relates to a unit, that is able to build up a connection to another connecting element and support the joining of conduits.

In an example, for the purpose of joining with the other connecting element, the connecting element 14 possesses a surface area. Preferably, the surface area mainly extends in a direction along the cross section of a pipe. This surface area is configured to contact the surface area of the other connecting element. The surface area is the basis for building up a gas-leak tight connection, explained further below.

In an example, the surface area is pretreated to improve the gas-leak tight connection.

In an example, the connection part 10 comprises polymers.

In an example, the connection part 10 comprises PTFE.

The term "connection port" relates to any pipe or tube ending, that can be used to receive another tube to propagate a series of tubes to achieve a piping or tubing system.

The term "conduit segment 18" relates to a divisional unit of the piping or the tubing system. The "conduit segment 18" therefore comprises a "connection port" at each end of the segment.

In an example, since conduits are adjoined at their ends, the connecting element 14 is configured as integral part of the connection port of a conduit. The connecting element 14 and the conduit are manufactured from a single piece.

The term "sealing element 16" relates to any substance, that is impermeable for specific or any known gas and/or liquid over a wide range of temperatures or pressures. In other words, the sealing element 16 blocks diffusion of substances. The sealing element 16 therefore is chemically inert with respect to liquids and gases.

In an example, the sealing element 16 is configured to be free from channels, pores or bubbles.

The term "placeable" means, that the sealing element 16 is configured to be in contact with the connecting element 14.

In an example, the sealing element 16 is adjusted to the surface and shape of the connecting element 14.

In an example, the sealing element 16 is configured to achieve a homogeneous distribution, when in contact with the connecting element 14.

The term "connecting interface 22" is a surface part of the connecting element 14, that is in closest contact with a surface part of the connecting element of the adjoining conduit segment 24.

The term "meltable" means, that the sealing element 16 can be brought from a solid state to a liquid state. At this state the sealing element 16 can be described as fluid, liquified or liquid. It implies phase change of the sealing element 16. The liquid state achieves, that the sealing element 16 deforms upon its contact with the connecting element 14, the connecting element of the adjoining conduit segment 24 and with the at least one surface 26 of the connecting interface 22. The sealing element 16 adjusts its surface to the surface of the connecting element 14.

In an example, the sealing element 16 is configured to weaken its surface tension in liquid state.

In an example, the at least one sealing element 16 comprises a lower melting point than the connecting element 14, the connecting element of the adjoining conduit segment 24 and the at least one surface 26 of the connecting interface 22.

In an example, the sealing element 16 comprises solder.

In an example, the sealing element 16 comprises solder that is configured to melt under frictional forces acting on the sealing element 16.

In an example, the sealing element 16 further is configured as a solder ring.

The term "assembly phase" describes a mounting status of the connection part 10, where the sealing element 16 is providing contact between the connecting element 14 and the connecting element of the adjoining conduit segment 24 and the connecting element 14 and the connecting element of the adjoining conduit segment 24 are brought together as close as possible.

The term "maximizing their contact" means increasing the adhesion of the sealing element 16 to the connecting elements 14 adjacent. Preferably, the sealing element 16 and the connecting element 14 maximize their interatomic contact at the connecting interface 22. In other words, it also means that the sealing element 16 forms a metallic bond to the connecting elements 14 adjacent.

In an example, the metallic bond comprises intermetallic compounds formed at the boundary of the sealing element 16 and the connecting elements 14.

In an example, the intermetallic compounds are required to provide for the gas leak-tight connection.

In an example, the intermetallic compounds are required to provide for the gas leak-tight connection with respect to hydrogen and helium.

The term "solidifiable" means, that the sealing element 16 in a liquid state can be brought back in the solid state, when being at the connecting interface 22. The solidified sealing element 16 in the solid state complements the shape of the connecting interface 22 between the connecting element 14 and a connecting element of the adjoining conduit segment 24.

The term "gas" relates to substances, that are in a gaseous state under standard conditions. The gases can comprise atmospheric and technical gases. The gases can reside in liquid or gaseous state.

In an example, the gases can be selected from the group comprising: H, He, NH₃, CH₄, O₂, N₂H₄.

In an example, the gases comprise molecules of molecular masses up to the average molecular mass of kerosene.

The term "leak" relates to an unwanted connection between the lumen enclosed by the conduit and the outer environment. The leak causes substances in the conduit to escape to the outer environment.

In an example, leaks are caused by irregularities, surface unevenness or surface roughness of the connecting interfaces 22. The irregularities can stem from poor machining of surfaces or oxide layers, debris and fibers or reuse of the connecting part. If irregularities meet between the connecting interfaces 22, channels form and leaks result.

In an example, these channels are in a microscopic size regime.

In an example, the liquid sealing element 16 flows into the channels formed by surface unevenness and blocks the channels, when the sealing element 16 solidifies.

In an example, the connecting surfaces are treated beforehand to minimize surface unevenness.

The term "detachable" means, that the gas-leak tight connection can be removed without considerable damage to the connecting elements 14. In such manner, the connecting elements 14 can be reused.

In an example, for the gas-leak tight connection a material-locked connection prevails over the friction-locked connection.

In other words, the metallic bond formed in the gas-leak tight connection can be described as adhesive bond.

In an example of Fig. 1, the connecting element 14 comprises a profile 30 configured for transferring structural loads to the connecting element of the adjoining conduit segment 24 via a form-locking connection 32 between the connecting element 14 and a connecting element of the adjoining conduit segment 24. The profile 30 forms a half portion 34 of the form-locking connection 32. The profile 30 is configured for an engagement with a compressing element 36 configured for urging the connecting element 14 and connecting element of the adjoining conduit segment 24 towards each other.

The term "profile 30" relates to an outer shape of the connecting element.

In an example, the profile 30 is a recess or a thread.

In an example, structural loads result from gravitational forces or from bending, distorting, shrinking, expanding the conduit segments or the gas leak-tight connection but also forces induced by the fluid pressure.

The term "form-locking connection 32" relates to a connection created by an interlocking of a connecting element 14 and another connecting element along a linear direction or rotational direction. The connecting element 14 and the other connecting element due to their forms interlock and block each other along the linear or rotational direction.

In an example, the compressive element 36 is configured to mediate a homogeneous compressive force of the at least one compressing element 36 from the connecting element 14 and the connecting element of the adjoining conduit segment 24.

In an example, the forces are transmitted by the compressing element 36 between the connecting element 14 and the connecting element of the adjoining conduit segment 24 in such manner that the forces compress the sealing element 16 between the connecting element 14 and the connecting element of the adjoining conduit segment 24.

In an example, the compressing element 36 is configured to take structural loads of the connecting interface 22 between the connecting element 14 and the connecting element of the adjoining conduit segment 24.

In an example, the compressing element 36 serves as load bearing element to comply with introduced loads in an aircraft. The introduced loads comprise internal fluid pressures from the conduit segments and/or external forces and acceleration.

In an example, the form-locking connection 32 is configured to take the structural loads of the connection between the connecting element 14 and a connecting element of the adjoining conduit segment 24.

In an example, not shown in Fig. 1, the profile 30 is configured to execute a compressive force upon the sealing element 16 in the assembled state.

In an example, the compressive force results from inherent elasticity of the form-locking connection 32 on the one side and from inherent elasticity of the sealing element 16 itself.

In an example, the profile 30 is configured to be preloadable with a preloaded static pressure force between the connecting element 14 and a connecting element of the adjoining conduit segment 24. The profile 30 is configured either as a recess and/or a flange. The profile 30 is configured to be form-lockable with a profile 30 and/or flange either of a preloadable compressing element and/or another connecting element. The profile 30 is further configured to be force-inducable by its form-lockability to generate a preloaded static pressure force between the connecting element 14 and the connecting element of the adjoining conduit segment 24.

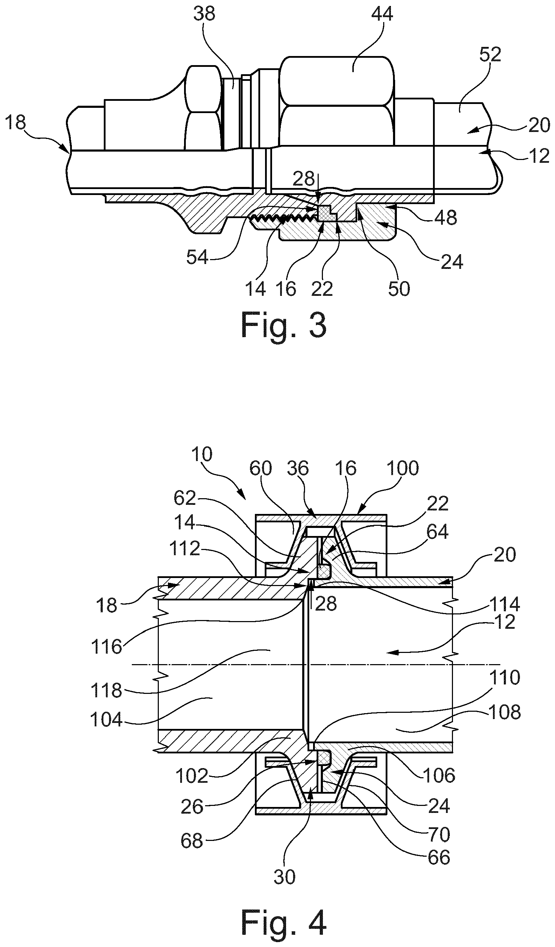

Fig. 2 and Fig. 3 both schematically show an example of a coupling arrangement forming a threaded connection 38 from connection parts.

In Fig. 2 and Fig. 3 also a connection part 10 for a fluid supply conduit 12, comprises a connecting element 14 and a sealing element 16. The connecting element 14 is configured as a connection port for a conduit segment 18 to an adjoining conduit segment 20, not shown in Fig. 2. The sealing element 16 is configured to be placeable at a connecting interface 22 between the connecting element 14 and a connecting element of the adjoining conduit segment 24, not shown in Fig. 2. The sealing element 16 is configured to be meltable during an assembly phase to maximize its contacts with at least one surface 26 of the connecting interface 22 and solidifiable to form a gas leak-tight connection between the connecting element 14 and the connecting element of the adjoining conduit segment 24, not shown in Fig. 2, of the fluid supply conduit 12. The connecting interface 22 of the connecting element 14 and the connecting element of the adjoining conduit segment 24 are configured to be detachable.

In Fig. 2 and Fig. 3, as an option, the profile 30 is configured as a first part of a threaded connection 38. In Fig. 2, the threaded connection 38 comprises an outer thread 40 on a first tube-like part 42 and a nut-type part 44 having an inner thread 46, as shown in the enlarged section 55 of Fig. 2, for connecting with the outer thread 40 of the first tube like part. As shown in Fig. 3, the nut has an inner abutment surface 48 for abutting against an outer abutment structure 50 arranged on a second tube-like part 52. The sealing receiving portion 54 is formed axially extending from the threaded connection 38. Preferably, as shown in the enlarged section 55 of Fig. 2, for an abutment of the first tube-like part 42 and the second tube-like part 52, both end faces of the first tube-like part 42 and the second tube-like part 52 are having correspondingly inclined abutment surfaces 56, 58.

In an example, the threaded profile 30 can be regarded as a profile 30 capable of preloading a static pressure force in interplay with the nut-type part 44 having an inner thread 46.

In an example, the preloadability of the profile 30 is allowed by the elasticity of its material.

The preloaded static pressure force can be regarded as potential mechanical energy stored in the connection part 10.

In an example, the preloadability is provided by a spring.

In an example, the preloaded force is generated by a bolted connection comprising two half portions 34.

In an example, the sealing element 16 is not in interaction with the preloaded static pressure between the connecting element 14 and a connecting element of the adjoining conduit segment 24.

In an example, the ability to be preloadable is exploited to overcome temperature-induced movement of the form-locking connection 32.

In an example, the outer abutment structure 50 is preloadable.

In an example, the nut-type part 44 facilitates detachability from the connecting interface 22.

In an example, the inclined abutment surfaces 56, 58 of the first tube-like part 42 and the second tube-like part 52 allow for flexibility of their form-locking connection 32.

As an advantage, the thread takes on the structural loads and the sealing is responsible for the gas tightness of the connection, thereby eliminating the drawback of each conventional connection in comparison to a welded connection, while still remaining quasi removable.

As an advantage, the ability of the respective sealing material to use the capillary effect to fill the gap between union and sleeve can be used.

As an advantage, for non-capillary solders the applied force is able to motivate the intermetallic exchange of the solder with the flanges.

Fig. 4 schematically shows a cross section of an example of a coupling arrangement forming a flange connection 60.

Fig. 4 also shows a connection part 10 for a fluid supply conduit 12 and comprises a connecting element 14 and a sealing element 16. The connecting element 14 is configured as a connection port for a conduit segment 18 to an adjoining conduit segment 20. The sealing element 16 is configured to be placeable at a connecting interface 22 between the connecting element 14 and a connecting element of the adjoining conduit segment 24. The sealing element 16 is configured to be meltable during an assembly phase to maximize its contacts with at least one surface 26 of the connecting interface 22 and solidifiable to form a gas leak-tight connection (arrows 28) between the connecting element 14 and the connecting element of the adjoining conduit segment 24 of the fluid supply conduit 12. The connecting interface 22 of the connecting element 14 and the connecting element of the adjoining conduit segment 24 is configured to be detachable.

In an option, Fig. 4 shows the profile 30 as a first part of a flange connection 60. The flange connection 60 comprises a first flange 62 of the connecting element 14 and a second flange 64 of the connecting element of the adjoining conduit segment 24. The first flange 62 and the second flange 64 have matching end surfaces 66 for axially abutting against each other. At least one of the first flange 62 and the second flange 64 comprises an inclined back-surface 68 on the other side of the end surface. The flange connection 60 with its at least inclined back-surface 68 is configured for being urged against each other by a radially acting a compressing force of a sleeve-like compressing element 70.

In an example, any relative movement and deformation in the area of the solder, the sealing element 16 respectively, would lead to a breakage/failure of the connection. In order to prevent this a spring-loaded and retaining sleeve-like compressing element 70 is provided.

In an example, the flange and the sleeve-like compressing element 70 are configured to be elastic and preloadable, e.g. spring loaded.

In an example, the first and the second flange 64 exclusively contact each other via the sealing element 16.

In an example, the compressing element 36 and the profile 30 are configured to retain the compressive force acting on the connecting element 14 and the connecting element of the adjoining conduit segment 24, when the sealing element 16 is liquid or when the connecting element 14, the connecting interface 22, the profile 30 and the compressing element 36 are subject to thermal movement.

In an example, the sleeve-like compressing element 70 gives way when the sealing element 16 is liquid or the whole connection part 10 undergoes thermal deformation.

In an example, the sleeve-like compressing element 70 is configured to compensate for thermal-induced movement.

In an example, the sleeve-like compressing element 70 is a V-clamp.

In an example, the materials of the flanges and the sealing element are not restricted to any specific material.

As an advantage, the flange with the V-clamp takes on the structural loads of the connection, while the sealing is responsible for the gas tightness of the connection, thereby eliminating the drawback of each conventional connection in comparison to a welded connection while remaining quasi removable still.

As an advantage, after removal of the circumferential V-clamp the connection can be opened either by force or by reheating up to the melting temperature of the sealing.

As an advantage, the pre-installed and pre-torqued V-band clamp ensures a constant pressure between the flanges and an sealing element 16 also after melting and cooling down.

In a further option, the flange can be bolted.

In an example of Fig. 4, also a coupling arrangement 100 is shown for coupling conduit segments of fluid supply conduits. The coupling arrangement 100 comprises a first connecting partition 102 for a first conduit segment 104. The coupling arrangement 100 also comprises a second connecting partition 106 for a second conduit segment 108. The first connecting partition 102 is configured as a connection part 10 according to one of the previous examples and comprises the connecting element 14 as a first connecting element. The second connecting partition 106 comprises a matching connecting element as a second connecting element 110. The first connecting element and the second connecting element 110 are configured to be complementary to each other. The sealing element 16 is configured to be placeable between the first connecting element and the second connecting element 110.

In an example, the coupling arrangement 100 comprises more than two conduit segments, for example three, four or five.

In an example, the nut thread is provided with the first connecting element.

In an example, two flanges with compressing ring-type sleeve are provided with the first connecting element.

The term "complementary" relates to the functions of the first and the second connecting element 110 in supplementing each other to form a functioning and gas-leak tight coupling arrangement 100. It means, that if a sealing element 16 is provided with the first connecting element, a sealing element 16 is not required by the second element. It means that if the first connecting element is provided with an outer thread 40, the second connecting element 110 is provided with a nut-type part 44 having an inner thread. It further means, that if the first connecting element is provided with sleeve-like compressing element 70, the second connecting element 110 does not require to have one. Both, the first and the second element are complementary to each other and add-up to a functioning unit.

In an example, the parts of the coupling arrangement 100 comprise different metallic compounds. The coupling arrangement 100 allows for the connection of connecting elements and adjoining conduit segments of different materials.

In an example, it can be envisaged, that the second connecting element 110 is a functional unit.

In an example, the functional unit can be a lid. The lid interrupts the fluid communication of the conduit of the first connecting element to the second connecting element. The coupling arrangement 100 is used to seal the open end of conduits.

In further examples, the functional unit is a pressure gauge, a valve, an extraction unit, a T-fitting, a temperature controller, a unit for removing ice-crystals, a flowmeter, a hydrogen filling station, a unit for leak-detection or an inspection shaft.

In an option of Fig. 4, the first connecting element and the second connecting element 110 are configured as positioning and aligning connection 112 of the adjoining first and second conduit segments. Preferably, the positioning and aligning connection 112 comprises a joint protrusion 114 and a receiving space 116 for the sealing element 16, the receiving space 116 at least partly sealed off against an inner fluid supply lumen 118 by the joint protrusion 114.

In an example, the positioning and aligning connection 112 comprises male and female connection features.

As an advantage, a step in the flanges prevents an ingress of the sealing into the pipe.

In an example, not shown in Fig. 4, the coupling arrangement 100 is configured to sustain a gas leak-tight connection between the first connecting element and the second connecting element 110 over a range of temperatures comprising temperatures up to the fluid state of the at least one sealing element 16 of the coupling arrangement 100.

In an example, the range of temperatures comprises liquid hydrogen temperatures at a lower range of ca. -253 °C and temperatures of the liquid sealing element at a higher range of ca. 450 °C.

In an example, the temperature range shall not exceed the melting point of soldering material, e.g., 450°C for brazing solder and 370°C for tinning solder.

In an example, not shown in Fig. 4, the coupling arrangement 100 is configured to sustain a gas leak-tight connection for a fluid with a small molecular size of the group comprising at least hydrogen and helium.

The gas-leak tight connection especially relates to molecules with a small kinetic diameter and low molecular weight.

In an example, this is especially achieved by having a solidified sealing element 16 blocking the smallest pores of gas-leaking connections.

In an example, the weight: small refers to up to 2 g/ mol.

In an example, not shown in the figures, the sealing element 16 is configured to be meltable via inductive heating during the assembly phase. The inductive heating is generatable by externally applying electromagnetic fields, wherein for generating heat, it is provided at least one of the following. The sealing element 16 is configured to be susceptible for the electromagnetic fields to generate the heat within the sealing element 16. A heating element is provided adjacent the sealing element 16. The heating element is configured to be susceptible for the electromagnetic fields to generate the heat within the heating element and to transfer the thermal energy to the sealing element 16. The connecting element 14 is configured to be susceptible for the electromagnetic fields to generate the heat within the connecting element 14 and to transfer the thermal energy to the sealing element 16.

In an example, for inductive heating a magnetic frequency band susceptible to heat non-ferromagnetic metals.

In an example, inductive heating permits heating of the sealing element 16 only.

As an advantage, inductive heating induces heat locally, such that an overall impact of heat on the conduit segments is reduced.

In another example, the sealing element 16, the heating element and the connecting element 14 are susceptible to inductive heating, while carrying a ferromagnetic substance.

In an example, the ferromagnetic substance is superficially applied during assembly phase.

In an example, the sealing element 16 is configured to adapt to thermal movement of the connecting element 14 and the other connecting element.

As an option, for heating the sealing element 16, a hot gas or liquid might be introduced to the sealing element 16 via the adjoining conduit.

As a further option, the adjoining conduit is filled with pressurized gas, e.g. inert gases like argon, when the sealing element 16 is melted.

In an example, also other methods than inductive heating are be applied in order to melt the sealing element 16, e.g. by convection heat or radiation heat, of ,e.g., an energy source like a flame and/or a laser.

In an example, the sealing element 16 is melted by the heat generated by frictional forces.

As an advantage, heating of the sealing element 16 and the surrounding pieces can be done by induction heating with mobile devices (e.g. induction coils).

As an advantage, the heat ingress can be localized precisely and happens fast enough to not cause significant changes in the metal structure of the flanges or the pipes.

As an advantage, heating of the sealing and the surrounding pieces can be done by induction heating with mobile devices.

As a further advantage, the heat ingress can be localized precisely and happens fast enough to not cause significant changes in the metal structure.

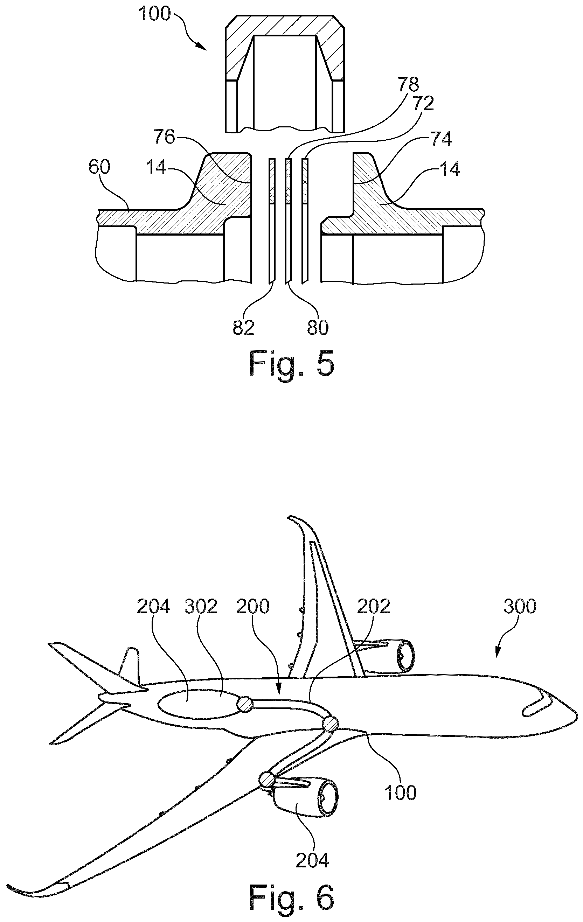

Fig. 5 schematically shows a part of a cross section of an example of a coupling arrangement 100 forming a flange connection 60 and comprising several melting aid layers.

In Fig. 5 a melting-aid layer 72 is provided for the sealing element 16. The melting-aid layer 72 comprises particles of a melting-aid substance effecting the melting of the sealing element 16 during the assembly phase in that it maximizes the contact of the sealing element 16 and its adjacent surfaces. The melting-aid layer 72 is provided as at least one of the following: Interbedded in the melting-aid substance in a contacting surface area 74 of the connecting element 14, coating on the connecting element 76, the coating comprising the melting-aid substance, coating on the sealing element 78, the coating comprising the melting-aid substance, interbedded in the melting-aid substance 80 in the sealing element 16 and shim-formed layer 82 comprising the melting-aid substance.

The melting-aid substance can also be referred to and understood as contact-maximizing substance.

In an example, it is the task of the contact-maximizing substance to maximize the contacts of the sealing element 16 with the connecting interface 22 as shown in Fig. 4.

In an example, the melting-aid substance is configured to enhance the flux of the melted sealing element, such that it covers irregularities of the connecting interface 22 and flows into the leaks to achieve a gas leak-tight connection.

In an example, particles of a melting-aid substance comprise a metal in a metallic form and/or a chemically distinct state.

In an example, the metal is chosen from a group comprising the elements: Cu, Zn, Cr, V, Mn, Mg.

In an example, the particles of a melting-aid substance comprise the element: Si.

In an example, the sealing element 78 and the melting-aid substance 80 comprise copper and the melting-aid layer 72 and the shim-formed layer 82 comprise aluminium solder, as shown in Fig. 5.

In an example, the sealing element 78 and the melting-aid substance 80 in Fig. 5 comprise a copper layer.

In an example, the sealing element 78 and the melting-aid substance 80, the melting-aid layer 72 and the shim-formed layer 82 in Fig. 5 are arranged in a sandwich-like manner.

In an example, the resulting structure of the soldered alloy in the sealing element 16, as shown in Fig. 1 to Fig. 4, comprises a sandwich-like structure.In an example, Fig. 5 demonstrates a sandwich-like structure of the sealing element 16, as shown in Fig. 1 to Fig. 4, comprising the components the sealing element 78, the melting-aid substance 80, the melting-aid layer 72 and the shim-formed layer 82.

In an example, the melting-aid layer 72, as shown in Fig. 5, comprises a copper ring or a copper alloy ring. The ring maximizes the contacts of the sealing element 16 with its adjacent connecting 22 interfaces.

In an option, the connecting interface 22 comprises aluminium in Fig. 5. The contact of the aluminium of the connecting interface 22 to the copper of the sealing element 16 in Fig. 5 enforces the gas leak-tight connection between the connecting element 14 and the connecting element of the adjoining conduit segment 24.

In an option, the copper ring transmits heating energy in Fig. 5. The ring is configured to achieve a homogeneous thermal response at the connecting interfaces 22.

In an example, the copper ring at the connecting interface 22 is contacted from inside of the conduits by a heat source, not shown in Fig. 5, during assembly phase and used to melt the adjacent sealing element 16.

In an example, the sealing element 16 is provided as a copper ring and the connecting interface 22, respectively also the connecting element 14 of a conduit segment 18 comprise aluminium to form an aluminium copper alloy at the intermediary boundary of the connecting element 14 to the sealing element 16 and the sealing element 16 to another connecting element of an adjoining conduit segment 20 in Fig. 5. The aluminium copper alloy in Fig. 5 enhances the adherence between the connecting element 14 to the sealing element 16 and the sealing element 16 to another connecting element of an adjoining conduit segment 20. This way a stable and strong Al-Cu-Al connection is established between the conduit segment 18 and the adjoining conduit segment 20. The formation of the aluminium copper alloy in Fig. 5 not only forms a stronger bond between conduit segments 18 and their connecting elements 14 but also provides for a high leak-tightness of the bond with respect to substances contained by the conduit segments 18.

In an example, the connecting element 14 comprises a metal that is configured to form an alloy with the metal of the sealing elements 16 in order to increase strength and leak-tightness of the connection to the connecting element 14 of the adjoining conduit segment 20.

In an example, the melting-aid substance 80 is applied by electroplating, not shown in Fig. 5.

In an example, the melting-aid substance 80 is applied by electroplating of a metallic compound comprising copper.

In an example, the sealing element 16 retains the compressive force of the compressing element 36 by forming an adhesive metallic bond between the compressing element 36 and the connecting element 14.

In an example, the melting-aid substance is configured to have a higher melting point, than the sealing element 16.

In an example, the melting-aid substance is configured to form an alloy with the sealing element 16.

As an advantage, the design of the connection allows for a high variety of metals to be used as flange material.

As an advantage, mixed metal connection could also be realized.

Fig. 6 schematically shows an airplane with a conduit system 200 based on the coupling arrangement 100. The conduit system 200 comprises a plurality of conduit segments 202 and at least one coupling arrangement 100 according to one of the previous examples. At least some of the conduit segments are interconnected by the at least one coupling arrangement 100.

In an example, a conduit system 200 of an entire hydrogen infrastructure is provided. The hydrogen infrastructure is provided having restricted space to access the conduits.

As an advantage, the coupling arrangement 100 allows repair and modification of the hydrogen system in constrained space.

In an example of Fig. 6, the conduit system 200 further comprises a hydrogen tank 204 connected to the conduit system 200 by the coupling arrangement 100.

In an example of Fig. 6, an aircraft 300 comprises a fluid reservoir 302 storing a fluid and at least one load 304 configured for operating with the fluid and the conduit system 200 of the previous examples. The conduit system 200 supplies the fluid from the fluid reservoir 302 to the at least one load 304.

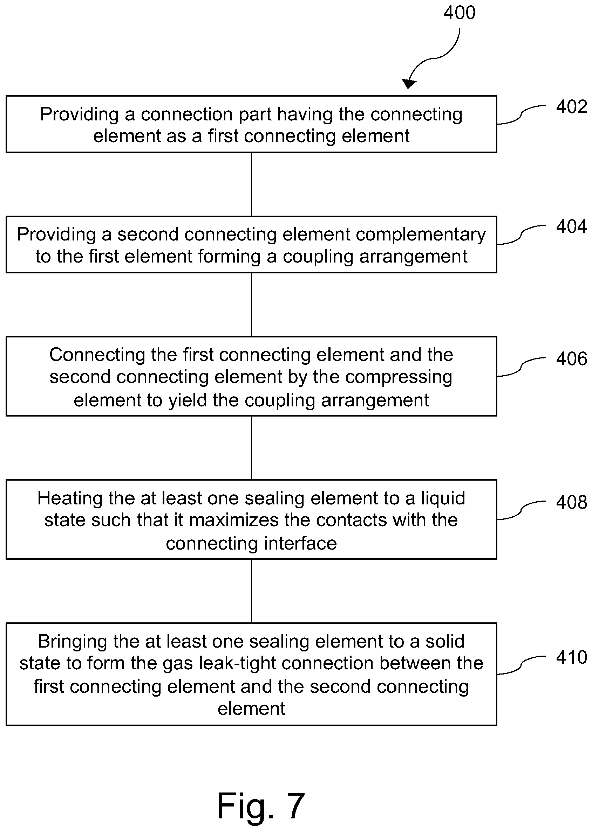

Fig. 7 shows basic steps of an example of a method 400 for sealingly connecting conduits by the connection part 10. The method 400 comprises the following steps:
In a first step 402, a connection part 10 is provided, according to one of the previous examples, having the connecting element 14 as a first connecting element.

In a second step 404, a second connecting element 110 complementary to the first element forming a coupling arrangement 100 according to one of the previous examples is provided.

In a third step 406, the first connecting element and the second connecting element 110 are connected by the compressing element 36 to yield the coupling arrangement 100.

In a fourth step 408, the at least one sealing element 16 is heated to a liquid state such that it maximizes the contacts with at least one surface of the connecting interface 22.

In a fifth step 410, the at least one sealing element 16 is brought to a solid state to form the gas leak-tight connection between the first connecting element and the second connecting element 110.

In an example, a method for separating the coupling arrangement 100 for conduits, comprises the following steps: Providing the coupling arrangement 100, loosening the compressing element 36, heating the coupling arrangement 100 to bring the sealing element 16 to the liquid state and separating the first connecting element from the second connecting element 110.

In an example of the method 400 as an additional step, the connection part 10 is provided as connecting element 14 without the sealing element 16 and the sealing element 16 is added to the connecting element 14 to yield the connection part 10 during the additional step.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A connection part (10) for a fluid supply conduit (12), comprising:
- a connecting element (14); and
- a sealing element (16);
wherein the connecting element is configured as a connection port for a conduit segment (18) to an adjoining conduit segment (20);
wherein the sealing element is configured to be placeable at a connecting interface (22) between the connecting element and a connecting element of the adjoining conduit segment (24);
wherein the sealing element is configured to be:
- meltable during an assembly phase to maximize its contacts with at least one surface (26) of the connecting interface; and
- solidifiable to form a gas leak-tight connection between the connecting element and the connecting element of the adjoining conduit segment of the fluid supply conduit; and
wherein the connecting interface of the connecting element and the connecting element of the adjoining conduit segment is configured to be detachable.

2. Connection part according to claim 1, wherein the connecting element comprises a profile (30) configured for transferring structural loads to the connecting element of the adjoining conduit segment via a form-locking connection (32) between the connecting element and a connecting element of the adjoining conduit segment;
wherein the profile forms a half portion (34) of the form-locking connection; and
wherein the profile is configured for an engagement with a compressing element (36) configured for urging the connecting element and connecting element of the adjoining conduit segment towards each other.

3. Connection part according to claim 1 or 2, wherein the profile is configured to execute a compressive force upon the sealing element in the assembled state.

4. Connection part according to claim 1, 2 or 3, wherein the profile is configured as a first part of a threaded connection (38) comprising:
- an outer thread (40) on a first tube-like part (42); and
- a nut-type part (44) having an inner thread (46) for connecting with the outer thread of the first tube like part, and the nut having an inner abutment surface (48) for abutting against an outer abutment structure (50) arranged on a second tube-like part (52);
wherein a sealing receiving portion (54) is formed axially extending from the threaded connection; and
wherein, for an abutment of the first tube-like part and the second tube-like part, both end faces of the first tube-like part and the second tube-like part are having correspondingly inclined abutment surfaces (56, 58).

5. Connection part according to one of the preceding claims, wherein the profile is as a first part of a flange connection (60) comprising:
- a first flange (62) of the connecting element; and
- a second flange (64) of the connecting element of the adjoining conduit segment;
wherein the first flange and the second flange have matching end surfaces (66) for axially abutting against each other;
wherein at least one of the first flange and the second flange comprises an inclined back-surface (68) on the other side of the end surface; and
wherein the flange connection with its at least inclined back-surface is configured for being urged against each other by a radially acting a compressing force of a sleeve-like compressing element (70).

6. Connection part according to one of the preceding claims, wherein the sealing element is configured to be meltable via inductive heating during the assembly phase;
wherein the inductive heating is generatable by externally applying electromagnetic fields, wherein for generating heat, it is provided at least one of the following:
- the sealing element is configured to be susceptible for the electromagnetic fields to generate the heat within the sealing element;
- a heating element is provided adjacent the sealing element, the heating element configured to be susceptible for the electromagnetic fields to generate the heat within the heating element and to transfer the thermal energy to the sealing element; and
- the connecting element is configured to be susceptible for the electromagnetic fields to generate the heat within the connecting element and to transfer the thermal energy to the sealing element.

7. Connection part according to one of the preceding claims, wherein a melting-aid layer (72) is provided for the sealing element;
wherein the melting-aid layer comprises particles of a melting-aid substance effecting the melting of the sealing element during the assembly phase in that it maximizes the contact of the sealing element and its adjacent surfaces; and
wherein the melting-aid layer is provided as at least one of the following:
i) interbedded in the melting-aid substance in a contacting surface area (74) of the connecting element;
ii) coating on the connecting element (76), the coating comprising the melting-aid substance;
iii) coating on the sealing element (78), the coating comprising the melting-aid substance;
iv) interbedded in the melting-aid substance (80) in the sealing element; and
v) shim-formed layer (82) comprising the melting-aid substance.

8. A coupling arrangement (100) for coupling conduit segments of fluid supply conduits, the coupling arrangement comprising:
- a first connecting partition (102) for a first conduit segment (104);
- a second connecting partition (106) for a second conduit segment (108);
wherein the first connecting partition is configured as a connection part according to one of the preceding claims comprising the connecting element as a first connecting element;
wherein the second connecting partition comprises a matching connecting element as a second connecting element (110);
wherein the first connecting element and the second connecting element are configured to be complementary to each other; and
wherein the sealing element is configured to be placeable between the first connecting element and the second connecting element.

9. Coupling arrangement according to claim 8, wherein the first connecting element and the second connecting element are configured as positioning and aligning connection (112) of the adjoining first and second conduit segments; and
wherein the positioning and aligning connection comprises a joint protrusion (114) and a receiving space (116) for the sealing element, the receiving space at least partly sealed off against an inner fluid supply lumen (118) by the joint protrusion.

10. Coupling arrangement according to claim 8 or 9, wherein the coupling arrangement is configured to sustain a gas leak-tight connection between the first connecting element and the second connecting element over a range of temperatures comprising temperatures up to the fluid state of the at least one sealing element of the coupling arrangement.

11. Coupling arrangement according to claim 8, 9 or 10, wherein the coupling arrangement is configured to sustain a gas leak-tight connection for a fluid with a small molecular size of the group comprising at least hydrogen and helium.

12. A conduit system (200), comprising:
- a plurality of conduit segments (202); and
- at least one coupling arrangement according to one of claims 8 to 11;
wherein at least some of the conduit segments are interconnected by the at least one coupling arrangement.

13. Conduit system according to claim 12, further comprising a hydrogen tank (204) connected to the conduit system by the coupling arrangement.

14. An aircraft (300), comprising:
- a fluid reservoir (302) storing a fluid;
- at least one load (304) configured for operating with the fluid; and
- the conduit system of claim 12 or 13;
wherein the conduit system supplies the fluid from the fluid reservoir to the at least one load.

15. A method (400) for sealingly connecting conduits, comprising the following steps:
- Providing (402) a connection part according to one of the claims 1 to 7 having the connecting element as a first connecting element;
- Providing (404) a second connecting element complementary to the first element forming a coupling arrangement according to one of claims 8 to 11;
- Connecting (406) the first connecting element and the second connecting element by the compressing element to yield the coupling arrangement;
- Heating (408) the at least one sealing element to a liquid state such that it maximizes the contacts with at least one surface of the connecting interface; and
- Bringing (410) the at least one sealing element to a solid state to form the gas leak-tight connection between the first connecting element and the second connecting element.
